# FASCICULE DE BREVET EUROPEEN

(11) **EP 2 683 580 B1**
(45) Date de publication et mention de la délivrance du brevet: **14.12.2016**
(21) Numéro de dépôt: 12713222.3
(22) Date de dépôt: 09.03.2012
(51) Int. Cl.: B60S 1/08, B60S 1/16, H02K 7/116, B60S 1/24

(54) **DISPOSITIF D'ESSUIE-GLACE À VIS À BILLES ET FOURCHETTE**
SCHEIBENWISCHERVORRICHTUNG MIT KUGELGEWINDETRIEB UND GABEL
WINDSHIELD WIPER DEVICE HAVING A BALL SCREW AND FORK

(30) Priorité: 10.03.2011 FR 1100718
(43) Date de publication de la demande: 15.01.2014
(73) Titulaire: Falgayras S.A.S., 31770 Colomiers (FR)
(72) Inventeur: CONTRASTI, Eric, F-31400 Toulouse (FR)
(74) Mandataire: Cabinet BARRE LAFORGUE & associés
(86) Numéro de dépôt international: PCT/FR2012/050508
(87) Numéro de publication internationale: WO 2012/120249

(56) Documents cités:
- DE-A1-102006 061 632
- DE-A1-102008 042 706
- DE-A1-102008 042 707

## Description

L'invention concerne un dispositif mécanique d'essuie-glace, en particulier un dispositif de motorisation d'un essuie-glace, et plus particulièrement une boîte de transmission entre un moteur d'essuie-glace et un essuie-glace.

L'invention s'applique à des essuie-glaces pour tous types de véhicules, et plus particulièrement pour des véhicules aéronautiques tels que des avions ou des hélicoptères par exemple.

De nombreux dispositifs mécaniques de motorisation et de transmission du mouvement entre un moteur et un ou plusieurs balai(s) d'essuie-glace ont été décrits. Parmi ceux-là, certains dispositifs proposent d'utiliser un moteur électrique en rotation alternative dans les deux sens de rotation pour motoriser chaque balai d'essuie-glace avec lequel il est en lien cinématique, alternativement dans un sens puis dans un autre.

De fortes contraintes sont exercées sur les systèmes d'essuie-glace, en particulier dans l'aéronautique. Les pièces mécaniques doivent être capables de résister dans le temps malgré des fréquences de balayage élevées, des conditions météorologiques extrêmes et des contraintes mécaniques importantes par exemple lors des accélérations de décollage d'un avion.

En outre les contraintes d'installation sont fortes dans un cockpit encombré de nombreux systèmes essentiels à l'aéronef. Par conséquent, de tels systèmes doivent présenter un petit encombrement moindre et les transmissions mécaniques longues sont donc proscrites.

Enfin, la réduction de la consommation en carburant des véhicules impose l'utilisation de systèmes légers.

Des systèmes d'essuie-glace d'aéronefs doivent donc être particulièrement légers, fiables, performants et compacts.

Le document FR 2 893 575 décrit par exemple un dispositif mécanique d'essuie-glace comportant un moteur dont l'arbre est équipé d'une vis sans fin conjuguée à une portion de roue dentée qui transmet son mouvement rotatif alternatif à un balai d'essuie-glace. Un tel dispositif permet de répondre à certaines des contraintes précédemment citées, mais son rendement énergétique et mécanique n'est pas optimum : le rendement mécanique est d'environ 0,3 pour un rapport de réduction de 1 :110. De plus, ces pièces mécaniques sont sujettes à une usure dans le temps qu'il est souhaitable de minimiser afin de diminuer les coûts de maintenance et améliorer la fiabilité du système.

De même on connaît DE102008042706 qui propose un dispositif mécanique d'essuie-glace comportant un moteur dont l'arbre menant est équipé d'une vis sans fin conjuguée avec un chariot coulissant. Le chariot présente une broche engagée dans une lumière d'un bras pivotant, ce dernier étant entraîné en rotation par la translation du chariot sur l'arbre menant. Cependant, ce dispositif nécessite un certain niveau de frottement entre l'arbre menant fileté et le chariot coulissant afin de faire face aux efforts du vent sur un essuie-glace, notamment sur un essuie-glace à l'arrêt. De même des frottements importants existent entre la broche du chariot et la lumière du bras pivotant. Un tel dispositif à frottements n'est en revanche pas adapté aux contraintes spécifiques des applications aéronautiques dans lesquelles les efforts subis et les vitesses de fonctionnement amèneraient à une dégradation et une rupture prématurée d'un tel dispositif, ce qui n'est pas compatible avec les exigences de fiabilité et de durabilité dans ce domaine.

D'autres dispositifs répondent à ces contraintes mais sont très encombrants et massifs.

L'invention vise donc à palier ces inconvénients.

L'invention vise en particulier à proposer un dispositif mécanique d'essuie-glace d'excellent rendement mécanique entre la rotation de l'arbre menant d'un moteur et la rotation d'un balai d'essuie-glace.

L'invention vise en particulier un tel dispositif offrant un grand taux de réduction entre la rotation de l'arbre menant d'un moteur et la rotation d'un balai d'essuie-glace tout en conservant un excellent rendement mécanique.

L'invention vise également à proposer un tel dispositif qui présente un encombrement réduit.

L'invention vise aussi à proposer un tel dispositif dont la consommation électrique est maîtrisée.

L'invention vise en outre un tel dispositif dont la fiabilité est améliorée grâce à une usure réduite de ses constituants mécaniques.

L'invention vise par ailleurs un dispositif léger.

L'invention concerne donc un dispositif d'essuie-glace comportant un moteur électrique adapté pour pouvoir entraîner un arbre menant dans deux sens de rotation autour d'un axe, ledit arbre menant présentant au moins un filetage, caractérisé en ce qu'il comporte en outre :
- un chariot taraudé à recirculation de billes monté sur l'arbre menant de façon à ce que les billes coopèrent avec au moins un filetage de l'arbre menant, de sorte que ledit chariot est entraîné en translation le long de l'arbre menant sous l'effet d'une rotation de l'arbre menant autour de son axe,
- au moins un bras pivotant :
   - monté pivotant autour d'un axe de pivotement orthogonal et distant à l'axe de l'arbre menant,
   - comprenant une liaison mécanique avec le chariot, adaptée pour pouvoir entraîner le bras pivotant en rotation autour de l'axe de pivotement sous l'effet d'une translation du chariot,
   - lié en rotation avec un balai d'essuie-glace.

L'arbre menant du moteur est un arbre fileté sur son diamètre extérieur, c'est-à-dire qu'il présente au moins un filetage hélicoïdal. En particulier il peut présenter un ou deux filetages, pouvant s'étendre ou non sur toute la longueur de l'arbre menant.

Tout déplacement de translation du chariot selon l'axe de l'arbre menant est proportionnel à un angle de rotation de l'arbre menant. Cette proportionnalité est régie par les caractéristiques du filetage hélicoïdal, en particulier par l'angle du filet.

L'arbre menant du moteur peut être en une pièce, ou bien peut être un arbre rapporté sur l'arbre menant d'origine du moteur, auquel il est alors monté de façon solidaire - par exemple par soudage ou assemblage - de sorte que dans tout le texte on considère un seul et même arbre, dit arbre menant.

L'axe de rotation de l'arbre menant, ou axe longitudinal de l'arbre menant, est au moins parallèle, sinon confondu, avec l'axe de translation du chariot.

Un chariot à recirculation de billes permet de diminuer les frottements entre le chariot et l'arbre menant, et ainsi d'économiser l'énergie consommée par le moteur. De plus, cette diminution importante des frottements permet d'augmenter le rendement mécanique global.

L'invention permet ainsi d'améliorer les performances mécaniques et cinématiques d'un dispositif d'essuie-glace. Elle permet aussi d'améliorer leur durabilité dans le temps, et donc de minimiser les coûts de maintenance et d'améliorer leur fiabilité.

En effet, dans un dispositif d'essuie-glace pour aéronef, les frottements entraînent une chute importante de la durée de vie du dispositif. C'est pourquoi un dispositif selon l'invention est particulièrement adapté aux aéronefs.

La chaîne cinématique entre le moteur et au moins un balai d'essuie-glace est donc, dans l'ordre, la suivante : moteur électrique, arbre menant fileté, chariot à billes, bras pivotant(s), balai(s) d'essuie-glace.

Un dispositif de transmission et/ou réduction entre le bras pivotant et le balai d'essuie-glace peut être prévu. Alternativement, le bras pivotant peut être solidaire du balai d'essuie-glace, par exemple par l'intermédiaire d'un arbre de transmission, ou en étant montés l'un dans le prolongement de l'autre, ou autre.

De nombreux choix d'assemblage du chariot et du bras pivotant parmi les transmissions mécaniques sont disponibles.

En particulier, avantageusement et selon l'invention, le bras pivotant présente une extrémité distale en liaison mécanique coulissante avec le chariot.

La liaison mécanique coulissante entre le chariot et l'extrémité distale du bras pivotant est avantageusement et selon l'invention une liaison coulissante selon une direction orthogonale à l'axe de l'arbre menant.

L'invention propose ainsi un dispositif particulièrement compact. Tous les mouvements de réduction entre arbre menant du moteur bras pivotant se font dans un espace réduit. En effet, la longueur de l'arbre menant selon l'invention n'a pas besoin d'être grande pour pouvoir transmettre un mouvement de rotation avec un bon rendement mécanique.

De plus, avantageusement et selon l'invention, au moins un bras pivotant est une fourchette présentant au moins une extrémité distale fourchue.

Ainsi, avantageusement, dans un dispositif selon l'invention :
- le chariot présente au moins une protubérance en saillie radialement par rapport à l'axe de l'arbre menant,
- chaque fourchette présente au moins une extrémité distale fourchue enfourchant une protubérance,
- chaque protubérance enfourchée par une extrémité fourchue d'une fourchette présente une forme adaptée pour pouvoir se déplacer en translation entre les dents de l'extrémité fourchue de la fourchette l'enfourchant, et transformer une translation du chariot en rotation de cette fourchette autour de l'axe de pivotement.

Le chariot présente au moins une protubérance (ou doigt) saillante permettant à une extrémité fourchue d'au moins une fourchette d'être entraînée par une translation du chariot. Rien n'empêche que le chariot présente plusieurs protubérances et, de manière générale, une forme adaptée à remplir des fonctions additionnelles.

Plusieurs bras pivotants et/ou fourchettes peuvent être installées de façon coopérante pour assurer une transmission mécanique entre le chariot et un balai d'essuie-glace de sorte qu'elles pivotent de concert par une translation du chariot. Alternativement ou en combinaison, l'une au moins des fourchettes peut présenter plusieurs extrémités fourchues pour pouvoir enfourcher plusieurs protubérances à la fois.

Une extrémité fourchue d'une fourchette présente avantageusement deux dents. Une telle fourchette présente donc une forme générale en fourche à nombre pair de dents : deux, quatre, six, etc. Les dents sont disposées par paires pour que chaque paire de dents puisse enfourcher une protubérance.

En particulier, avantageusement et selon l'invention, le chariot présente deux protubérances en saillie radialement opposées par rapport à l'axe de l'arbre menant, chaque protubérance étant enfourchée par une extrémité fourchue parmi deux extrémités fourchues d'une seule et unique fourchette. La fourchette enfourche donc aussi le chariot selon l'axe défini par les deux protubérances.

Avantageusement, une telle fourchette unique, présente donc deux paires de dents.

Chaque paire de dents est de dimension et de forme adaptée pour pouvoir enfourcher une protubérance du chariot. En particulier l'écartement entre deux dents d'une même paire est tel qu'une protubérance puisse y être enfourchée. Cet écartement est aussi suffisamment réduit pour que la protubérance ne puisse pas s'échapper de la fourche formée par les deux dents lors de translations alternatives du chariot dans un sens puis dans l'autre selon ladite direction de l'arbre menant. En outre, les dents ne sont pas montées de façon trop ajustée sur une telle protubérance de sorte à ne pas provoquer de frottements trop importants lors des translations du chariot. En effet lorsque le chariot se déplace en translation, dans le référentiel de la fourchette la protubérance se déplace en translation entre les dents de la fourchette.

Une extrémité fourchue d'une telle fourchette étant entraînée par une translation du chariot et la fourchette étant par ailleurs fixée librement rotative autour d'un axe de pivotement, l'ensemble de la fourchette pivote autour de l'axe de pivotement lorsque le chariot se déplace en translation selon l'axe de l'arbre menant.

Une telle fourchette pourrait donc être remplacée par un autre type de bras pivotant présentant une lumière oblongue dans laquelle se déplace en translation une protubérance, ou un doigt en saillie du chariot. De même, un bras pivotant peut présenter une protubérance destinée à coopérer avec un évidement pratiqué dans le chariot. De nombreux autres moyens équivalents d'assemblage coulissant du bras pivotant et du chariot peuvent être envisagés.

Ainsi, le chariot transforme une rotation de l'arbre menant en translation, et le bras pivotant transforme cette translation du chariot en une rotation de lui-même autour de l'axe de pivotement. Le bras pivotant transmet son mouvement de rotation à un balai d'essuie-glace - par l'intermédiaire ou non d'un dispositif de transmission. Tous types de dispositifs de transmission peuvent être envisagés dans un dispositif selon l'invention afin de transmettre le mouvement du bras pivotant à au moins un balai d'essuie-glace dans la direction attendue de balayage du balai d'essuie-glace. Le dispositif de transmission est donc choisi en particulier en fonction des orientations respectives du dispositif selon l'invention et du pare-brise à essuyer.

Avantageusement, un dispositif selon l'invention est aussi caractérisé en ce qu'au moins une protubérance comporte un roulement à billes monté d'axe de rotation orthogonal à l'axe de l'arbre menant, une bague intérieure dudit roulement étant fixée immobile au chariot, et une bague extérieure étant librement rotative par rapport au chariot et enfourchée par une extrémité fourchue d'une fourchette.

L'extrémité fourchue d'une fourchette enfourchant une telle protubérance est avantageusement montée avec un jeu mécanique non-nul positif par rapport au diamètre extérieur de la bague extérieure du roulement à billes formant protubérance. Ainsi, le roulement à bille « roule » entre les dents de la fourchette, notamment sur une dent de la fourchette lorsque le chariot est en translation dans un sens selon la direction de l'arbre menant et sur l'autre dent lorsqu'il est en translation dans l'autre sens selon cette direction.

L'invention présente donc l'avantage de diminuer largement les frottements entre le chariot et la fourchette, permettant ainsi d'améliorer le rendement et la durée de vie d'un dispositif d'essuie-glace selon l'invention.

C'est pourquoi, avantageusement et selon l'invention, chaque protubérance comporte un roulement à billes monté d'axe de rotation orthogonal à l'axe de l'arbre menant, une bague intérieure dudit roulement étant fixée immobile au chariot, et une bague extérieure étant librement rotative par rapport au chariot et enfourchée par une extrémité fourchue d'une fourchette.

Des moyens équivalents de réduction des frottements entre le chariot et chaque fourchette peuvent être envisagés.

De plus, avantageusement et selon l'invention, au moins un bras pivotant est accouplé avec un arbre mené pour pouvoir entraîner l'arbre mené en rotation autour de l'axe de pivotement sous l'effet d'une rotation du bras pivotant, un balai d'essuie-glace étant accouplé à l'arbre mené.

Le bras pivotant transmet son mouvement de rotation à l'arbre mené par n'importe quel dispositif connu de transmission mécanique, par exemple par des roues dentées, par une courroie, par assemblage du bras pivotant à l'arbre mené.

En particulier, avantageusement et selon l'invention, le bras pivotant présente une extrémité proximale comportant un alésage par lequel il est monté par ajustement sur l'arbre mené, le balai d'essuie-glace étant monté solidaire en rotation de l'arbre mené.

La liaison cinématique entre bras pivotant (ou fourchette) et arbre mené est donc de type solide, et toute rotation d'un bras pivotant ainsi monté à l'arbre mené est intégralement reportée vers l'arbre mené.

Ainsi l'arbre mené matérialise l'axe de pivotement de chaque bras pivotant : il guide chaque bras pivotant en rotation autour de l'axe de pivotement qui est confondu avec l'axe longitudinal de l'arbre mené.

De nombreuses manières de monter un tel bras pivotant sur l'arbre mené peuvent être envisagées. Cependant, avantageusement et selon l'invention, l'alésage d'un tel bras pivotant est ajusté par serrage sur l'arbre mené. L'arbre mené forme alors un ajustement avec le bras pivotant.

Aussi, un dispositif selon l'invention comprend avantageusement une unique fourchette montée pivotante autour de l'axe de pivotement, ladite fourchette présentant deux extrémités fourchues à deux dents chacune, chaque extrémité fourchue enfourchant une protubérance constituée d'un roulement à bille d'axe de rotation monté orthogonal à l'axe de l'arbre menant, une bague intérieure de chaque roulement étant fixée immobile au chariot, et une bague extérieure de chaque roulement étant librement rotative par rapport au chariot, les deux protubérances étant diamétralement opposées par rapport à l'axe de l'arbre menant.

Avantageusement, une unique fourchette présentant deux extrémités distales fourchues présentant chacune une paire de dents, enfourche deux protubérances en saillie du chariot radialement opposées par rapport à l'axe de l'arbre menant, et présente un alésage sur son extrémité proximale (opposée à son extrémité fourchue), l'alésage étant monté par serrage sur l'arbre mené.

De plus, avantageusement et selon l'invention, un balai d'essuie-glace est monté mécaniquement solidaire de l'arbre mené, de sorte qu'une rotation de l'arbre mené autour de l'axe de pivotement entraîne le balai d'essuie-glace en rotation autour de cet axe.

Un tel balai d'essuie-glace est donc entraîné directement par l'arbre mené. Chaque fourchette, l'arbre mené et le balai d'essuie-glace forment donc un assemblage mécanique solide pouvant se déplacer de concert en rotation autour de l'axe de pivotement

Avantageusement un seul balai d'essuie-glace est monté mécaniquement solidaire de l'arbre mené d'un dispositif mécanique selon l'invention. Ainsi un dispositif mécanique selon l'invention est totalement dédié à un et un seul balai d'essuie-glace, de sorte qu'il ne présente pas de transmission mécanique longue entre deux balais d'essuie-glace et permet de minimiser l'encombrement.

En effet, l'encombrement total de deux dispositifs mécaniques de motorisation et de transmission selon l'invention, chacun étant installé séparément, chacun à proximité immédiate d'un balai d'essuie-glace est bien moindre que l'encombrement total d'un dispositif mécanique de motorisation et de transmission unique vers deux balais d'essuie-glace distants. En outre il est plus simple d'installer deux dispositifs mécaniques compacts selon l'invention indépendamment d'un seul dispositif mécanique plus encombrant. C'est particulièrement le cas dans un cockpit d'aéronef, généralement encombré de nombreux systèmes.

Par ailleurs, avantageusement et selon l'invention, le chariot est en outre bloqué en rotation autour de l'axe de l'arbre menant par un coulisseau d'axe parallèle à l'axe de l'arbre menant, sur lequel ledit chariot coulisse.

Ainsi le chariot est guidé par le coulisseau de guidage selon la direction de l'arbre menant et toute rotation du chariot autour de l'axe de l'arbre menant est interdite par le coulisseau. Cette disposition est particulièrement avantageuse pour s'assurer que chaque protubérance et chaque extrémité fourchue les enfourchant restent dans une configuration optimum pour la transmission mécanique.

Le chariot peut avantageusement présenter une liaison à billes avec ledit coulisseau de guidage, de sorte à minimiser les frottements lors de ses déplacements en translation le long du coulisseau de guidage.

Le coulisseau de guidage est avantageusement monté fixe sur un bâti commun avec le stator du moteur électrique.

Avantageusement, un dispositif selon l'invention comporte en outre un boîtier :
- enfermant le moteur électrique, l'arbre menant, le chariot, le bras pivotant,
- présentant au moins une ouverture de passage pour une liaison en rotation entre le bras pivotant et l'arbre mené,
- présentant un palier de maintient de l'arbre menant selon son axe.

En particulier, lorsque les moyens de transmission comprennent un arbre mené entre un ou plusieurs bras pivotant(s) et un balai d'essuie-glace, c'est l'arbre mené qui saille du boîtier. L'arbre mené assure alors la transmission entre d'une part le moteur et l'assemblage de réduction (vis à billes et bras pivotant(s)) montés à l'intérieur du boîtier et d'autre part le balai d'essuie-glace situé à l'extérieur de ce boîtier.

Ainsi, avantageusement, un dispositif selon l'invention comporte un boîtier :
- enfermant le moteur électrique et le dispositif de transmission,
- présentant au moins une ouverture de passage de l'arbre mené,
- présentant un palier de maintien de l'arbre menant selon son axe,
- adapté pour maintenir le coulisseau immobile en position d'axe parallèle à l'axe de l'arbre menant.

Chaque bras pivotant est maintenu selon son axe de pivotement par un tel boîtier, notamment lorsque les moyens de transmission comprennent un arbre mené dont l'axe est confondu avec l'axe de pivotement de chaque bras pivotant. En effet, l'arbre mené est maintenu par le boîtier selon un axe de pivotement constant par rapport audit boîtier. L'arbre mené peut par exemple être monté à l'une de ses extrémités dans un alésage partiel dans l'épaisseur du boîtier équipé d'un roulement à billes, et au point où il traverse l'enveloppe du boîtier dans un second alésage équipé d'un second roulement à billes. Chaque bras pivotant est alors monté sur l'arbre mené entre ces deux points, par exemple par serrage d'un alésage du bras pivotant sur l'arbre mené.

De même, l'arbre menant du moteur peut être maintenu à son extrémité distale par un alésage partiel dans l'épaisseur du boîtier, équipé d'un roulement à billes. L'arbre menant est maintenu par son autre extrémité car il est solidaire du rotor du moteur dont le stator est monté fixe dans le boîtier.

Le coulisseau de guidage est par exemple monté fixe dans le boîtier par ses deux extrémités, selon un axe parallèle à l'axe de l'arbre menant (c'est-à-dire à l'axe de l'arbre menant du moteur).

En outre, avantageusement, dans un dispositif mécanique selon l'invention, le moteur électrique est un moteur électrique à courant continu sans balai.

Un tel moteur est particulièrement adapté à un dispositif mécanique selon l'invention. Il peut en particulier être commandé par un dispositif électronique de contrôle/commande dans deux sens de rotation.

C'est pourquoi, avantageusement un dispositif mécanique selon l'invention comporte aussi des capteurs permettant le contrôle de l'alimentation du moteur. Par exemple, un tel dispositif peut comporter des capteurs de rotation de l'arbre menant et/ou du rotor du moteur tel que des capteurs à effet Hall, un encodeur optique monté sur l'arbre mené afin de connaître à tout moment la position du balai essuie-glace sur une course entre deux positions extrémales, deux capteurs à effet Hall montés sur la course d'une portion d'un bras pivotant - par exemple équipée d'un petit aimant - pour déclencher différentes phases de balayage (par exemple des phases d'accélération et/ou de décélération à l'approche des positions extrémales du balai d'essuie-glace).

L'invention concerne également un dispositif mécanique caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique d'une vue en perspective d'un mode de réalisation particulier d'un dispositif mécanique conforme à l'invention dans lequel le boîtier est représenté en éclaté,
- la figure 2 est un schéma en perspective conforme à la figure 1, par une vue de trois-quarts dessous, le dispositif étant à l'état monté, le boîtier n'étant pas représenté.

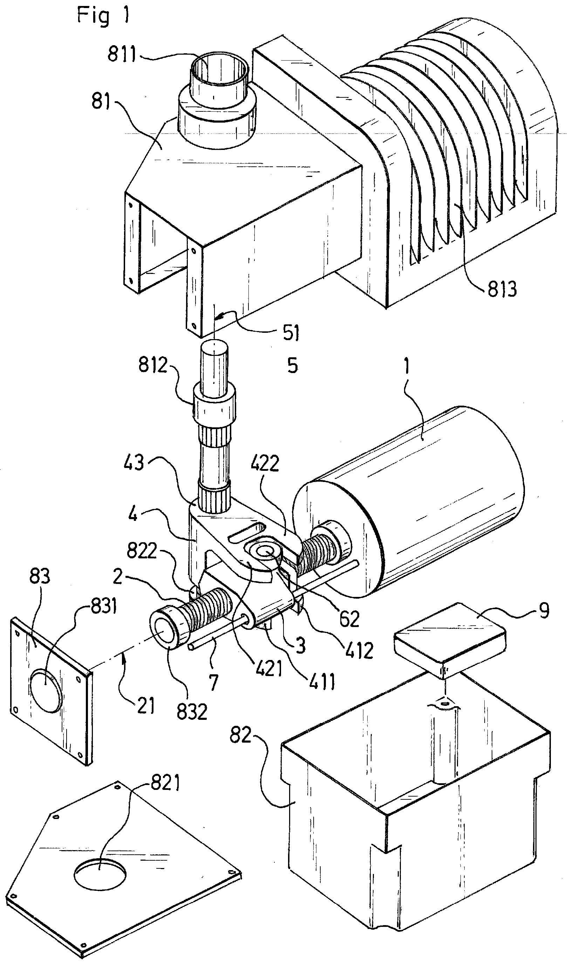

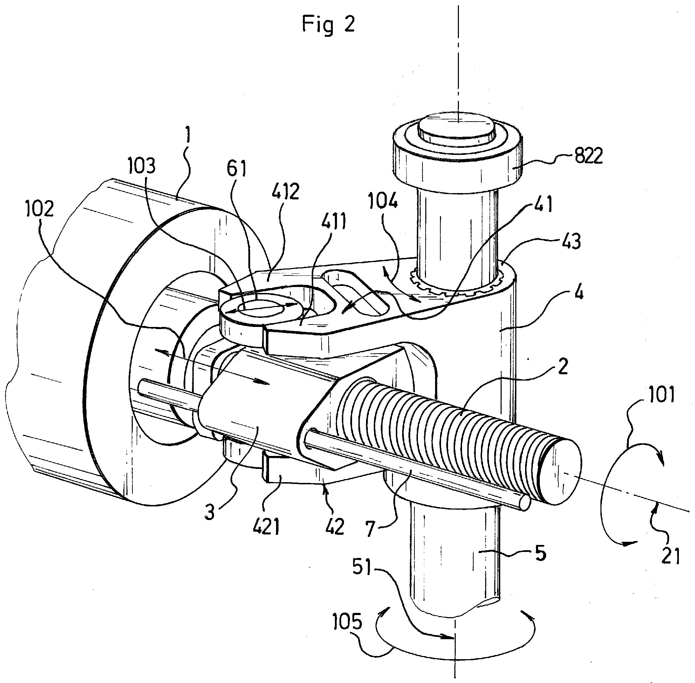

Un dispositif mécanique d'essuie-glace selon l'invention tel que représenté aux figures 1 et 2 est particulièrement adapté pour être monté sur un aéronef de type avion ou hélicoptère.

Ce dispositif comporte un moteur 1 électrique à courant continu sans balai, par exemple un moteur alimenté par une tension de 280V à quatre pôles. Ce moteur présente un stator extérieur pouvant être monté dans un boîtier 81, 82, 83, et un rotor intérieur assemblé à un arbre 2 menant fileté sur l'extérieur. Le moteur est rotatif dans deux sens, de sorte que l'arbre 2 menant peut tourner dans deux sens autour de son axe 21 longitudinal. L'arbre 2 menant présente un alésage intérieur à l'une de ses extrémités axiales équipé de cannelure complémentaire de cannelures présente sur le rotor du moteur 1 pour pouvoir assurer une transmission complète des rotations du rotor à l'arbre menant.

Le boîtier 83 est en outre adapté pour accueillir l'extrémité distale de l'arbre menant et le maintenir selon son axe 21 de rotation en minimisant les frottements. À cet effet, la portion 83 de boîtier prévue pour accueillir l'extrémité distale de l'arbre menant peut présenter un bossage 831 équipé d'un roulement 832 à billes.

Le filetage de l'arbre 2 menant est choisi en fonction du taux de réduction attendu entre le moteur électrique et un arbre 5 mené relié à un balai d'essuie-glace non représenté.

Sur le filetage de l'arbre menant est monté un chariot 3 à recirculation de billes parfois appelé écrou à billes. Ainsi l'arbre menant et le chariot forment un assemblage souvent appelé vis à billes.

Le chariot à billes peut se déplacer en translation sur l'arbre menant selon l'axe 21 longitudinal de l'arbre menant qui est aussi l'axe de révolution de l'arbre menant. En particulier le chariot à billes présente un taraudage équipé du système recirculation de billes et adapté pour coopérer avec le filetage de l'arbre 2 menant.

Tout déplacement en translation du chariot 3 à billes est proportionnel à une rotation de l'arbre menant. En particulier dans l'exemple de réalisation présenté aux figures 1 et 2, une rotation à 360° de l'arbre de rotation entraîne une translation du chariot à billes d'environ 2mm.

Le chariot à billes présente deux protubérances 61, 62 en saillie radialement du chariot 3 à billes par rapport à l'axe 21 de l'arbre menant. Les deux protubérances sont réparties de part et d'autre du chariot. Chaque protubérance est constituée d'un roulement à billes monté sur l'axe de rotation sensiblement orthogonal à l'axe 21 de l'arbre menant. Chaque roulement à billes est monté tel que sa bague intérieure est fixe par rapport au chariot, par exemple par ajustement serré du roulement sur un doigt du chariot, et tel que sa bague extérieure est librement rotative par rapport au chariot.

Le dispositif comprend en outre une fourchette 4 monobloc unique présentant deux extrémités 41, 42 fourchues constituées chacune d'une paire de dents 411, 412, 421, 422. Ladite fourchette est montée de telle sorte que ses extrémités 41, 42 fourchues enfourchent respectivement l'une et l'autre des protubérances :
- une première paire 411, 412 de dents d'une première extrémité 41 fourchue enfourche une première protubérance 61,
- une seconde paire 421, 422 de dents d'une seconde extrémité 42 fourchue enfourche une seconde protubérance 62.

Ainsi les bagues extérieures des deux roulements à billes 61, 62 peuvent rouler librement sur les faces intérieures des dents 61, 62, 63, 64 de la fourchette. Utiliser des roulements à billes 61, 62 pour protubérances permet donc de réduire les frottements entre chariot et fourchette.

En outre, l'écartement longitudinal selon l'axe 51 de pivotement entre les deux extrémités 41, 42 fourchues de la fourchette est choisi tel que lesdites extrémités 41, 42 fourchues de la fourchette ne soient à aucun moment en contact avec le chariot à billes.

Sur son côté opposé à ses extrémités fourchues, la fourchette 4 présente un alésage 43 par lequel elle est montée sur un arbre 5 mené.

L'arbre 5 mené est maintenu selon son axe 51 longitudinal par le boîtier 81, 82 dont la forme est adaptée à cette fonction. En particulier les deux portions 81, 82 du boîtier peuvent présenter des alésages 811, 821 équipés d'un roulement 812 à rouleaux et d'un roulement 822 à billes pour limiter les frottements entre l'arbre mené et ledit boîtier.

La fourchette 4 étant montée par serrage sur l'arbre mené 5, elle est pivotante autour de l'axe, dit axe 51 de pivotement, longitudinal de l'arbre mené. La fourchette est montée sur l'arbre mené de sorte à former un ajustement avec ce dernier. Ainsi tout mouvement de rotation de la fourchette 4 est intégralement transmis à l'arbre 5 mené, et la fourchette ne peut pas glisser en translation sur l'arbre mené de sorte qu'elle est maintenue en position par rapport au chariot 3 à billes pour éviter tout frottement entre ses extrémités 41, 42 fourchues et le chariot.

Le chariot à billes présente un deuxième alésage d'axe parallèle à l'axe du taraudage pour la recirculation de billes. Ce deuxième alésage est monté sur un coulisseau 7 de guidage monté dans le boîtier 81, 82, 83 selon un axe parallèle à l'axe 21 de l'arbre menant.

En fonctionnement, l'arbre 2 menant est en rotation alternativement dans un sens puis dans un autre selon un mouvement 101 de rotation autour de l'axe 21 de l'arbre menant. Ce mouvement 101 de rotation est transformé par l'assemblage de l'arbre menant et du chariot en un mouvement 102 de translation du chariot selon l'axe 21 de l'arbre menant.

Le mouvement 102 de translation du chariot et donc de chacune des deux protubérances 61, 62 entraîne un mouvement 103 de translation de chacune des deux protubérances relativement aux deux interstices formés par les paires 411-412, 421-422 de dents des extrémités 41, 42 fourchues de la fourchette 4. Le mouvement 102 de translation du chariot entraîne la fourchette dans un mouvement 104 de rotation autour de l'axe 51 de pivotement.

La fourchette 4 étant montée solidaire mécaniquement de l'arbre 5 mené, tout mouvement 105 de rotation de la fourchette autour de l'axe 51 de pivotement correspond à un mouvement 105 de l'arbre mené autour dudit axe 51 de pivotement selon son axe longitudinal.

Par un tel dispositif mécanique on réalise une boîte de réduction entre le mouvement 101 rotatif fournit par un moteur 1 et un mouvement 105 rotatif à fournir à un balai d'essuie-glace. Par exemple dans le dispositif représenté aux figures 1 et 2, on obtient un rapport de réduction de 1:110.

En outre l'ensemble des liaisons mécaniques d'un tel dispositif mécanique présente un frottement très faible grâce à l'utilisation intensive de roulements à billes. Le rendement global d'un tel dispositif est donc très élevé pour un tel rapport de réduction : environ 0,8 entre le couple mécanique fournit par le rotor du moteur et le couple mécanique récupéré sur l'arbre 5 mené.

Un tel dispositif est compact car aucune des pièces mobiles ne fait de mouvements de grande envergure au cours du fonctionnement dudit dispositif. En effet, le mouvement 102 de translation du chariot à billes est le mouvement de plus grande amplitude dans le dispositif mécanique, et le chariot à billes se déplace entre deux positions éloignées d'environ 50mm. L'arbre 2 menant lui-même présente une longueur d'environ 120mm. Un tel dispositif est donc avantageusement contenu dans un volume d'environ 200mm x 100mm x 150 mm.

Par ailleurs, le boîtier présente une zone adaptée à recevoir un bloc 9 d'équipements électroniques, notamment un dispositif électronique de contrôle du moteur électrique pour gérer les phases de balayage, et commander le moteur en vitesse, en amplitude, etc... Le boîtier est avantageusement réalisé en aluminium pour être léger.

En plus d'être compact un tel dispositif est léger car ses pièces sont petites et la commande assurée par des composants électroniques miniaturisés et légers. Un tel dispositif mécanique pèse, boîtier et bloc 9 électronique compris, entre 2kg et 4kg, notamment environ 3kg.

En outre, le boîtier présente une forme adaptée pour optimiser le refroidissement du dispositif mécanique selon l'invention et du bloc 9 électronique. À cet effet, il présente notamment des nervures 813 permettant de mieux dissiper la chaleur.

Le boîtier apporte une protection mécanique et électromagnétique aux éléments mécaniques et électroniques qu'il renferme.

L'invention peut faire l'objet de nombreuses autres variantes de réalisation non représentées. En particulier, il est possible d'utiliser tous types de roulements à billes en fonction de leurs avantages et inconvénients connus. Par exemple certains roulements à billes des modes de réalisation présentés de l'invention pourraient avantageusement être remplacés par des roulements à rouleaux.

En outre d'autre moyens de transmission qu'un simple arbre mené peuvent être envisagés entre une fourchette et un balai d'essuie-glace.

Il est aussi possible de réaliser des dispositifs mécaniques selon l'invention de rapport de réduction différent et d'excellent rendement pour chaque rapport de réduction choisi.

Rien n'empêche non plus, de prévoir un coulisseau du type piston qui enferme le chariot, le chariot étant prévu pour coulisser dans ledit coulisseau.

Le coulisseau est alésé en son milieu pour présenter un logement intérieur adapté pour pouvoir accueillir l'arbre menant et le chariot en translation le long de l'arbre menant.

Le logement intérieur du coulisseau présente une forme complémentaire à l'enveloppe extérieure du chariot par une translation parfaite du chariot selon l'axe de l'arbre menant, c'est-à-dire sans rotation autour de l'axe de l'arbre menant.

Le logement intérieur du coulisseau et l'enveloppe extérieure du chariot présentent en section une forme différente d'un cylindre de révolution afin d'interdire la rotation du chariot autour de l'axe de l'arbre menant : par exemple une section ovale, rectangulaire, une combinaison d'un ergot sur le chariot et d'une gorge sur le coulisseau, etc...

Le coulisseau est en outre percé d'au moins une lumière oblongue parallèle à l'axe de l'arbre menant, adaptée pour pouvoir laisser dépasser et coulisser au moins une protubérance en saillie du chariot, afin de permettre le montage de ladite protubérance en liaison mécanique coulissante avec un bras pivotant disposé à l'extérieur du coulisseau. En particulier, le coulisseau présente, autour d'une lumière oblongue de passage d'une protubérance, un méplat permettant le coulissement d'un roulement à billes monté à l'extérieur du coulisseau, dont la bague intérieure est montée sur ladite protubérance, et dont la bague extérieure est montée en liaison mécanique coulissante avec ledit bras pivotant.

## Revendications

1. Dispositif d'essuie-glace comportant :
- un arbre (2) menant présentant au moins un filetage,
- un moteur (1) électrique adapté pour pouvoir entraîner l'arbre (2) menant dans deux sens de rotation autour d'un axe (21),
- un chariot (3) taraudé monté sur l'arbre menant de façon à être entraîné en translation le long de l'arbre menant sous l'effet d'une rotation de l'arbre menant autour de son axe (21), et présentant au moins une protubérance (61, 62) en saillie radialement par rapport à l'axe (21) de l'arbre (2) menant,
- au moins un bras pivotant :
• monté pivotant autour d'un axe (51) de pivotement orthogonal et distant à l'axe (21) de l'arbre (2) menant,
• comprenant une liaison mécanique coulissante avec au moins une protubérance (61, 62) du chariot (3), ladite liaison mécanique coulissante étant adaptée pour pouvoir entraîner le bras pivotant en rotation autour de l'axe (51) de pivotement sous l'effet d'une translation du chariot (3),
• lié en rotation avec un balai d'essuie-glace,
**caractérisé en ce que** :
- le chariot (3) est un chariot à recirculation de billes adaptées pour coopérer avec au moins un filetage de l'arbre (2) menant,
- au moins un bras pivotant est une fourchette (4) présentant au moins une extrémité (41, 42) distale fourchue enfourchant une protubérance,
- chaque protubérance (61, 62) enfourchée par une extrémité (41, 42) fourchue d'une fourchette (4) présente une forme adaptée pour pouvoir se déplacer en translation entre les dents de l'extrémité fourchue de la fourchette l'enfourchant, et transformer une translation du chariot (3) en rotation de cette fourchette autour de l'axe (51) de pivotement,
- au moins une protubérance (61, 62) comporte un roulement à billes monté d'axe de rotation orthogonal à l'axe (21) de l'arbre (2) menant, une bague intérieure dudit roulement étant fixée immobile au chariot (3), et une bague extérieure étant librement rotative par rapport au chariot et enfourchée par une extrémité fourchue d'une fourchette (4).

2. Dispositif selon la revendication 1, **caractérisé en ce que** chaque protubérance (61, 62) comporte un roulement à billes monté d'axe de rotation orthogonal à l'axe (21) de l'arbre (2) menant, une bague intérieure dudit roulement étant fixée immobile au chariot (3), et une bague extérieure étant librement rotative par rapport au chariot et enfourchée par une extrémité fourchue d'une fourchette (4).

3. Dispositif selon l'une des revendications 1 ou 2, **caractérisé en ce qu'**au moins un bras (4) pivotant est accouplé avec un arbre (5) mené pour pouvoir entraîner l'arbre mené en rotation autour de l'axe (51) de pivotement sous l'effet d'une rotation du bras (4) pivotant, un balai d'essuie-glace étant accouplé à l'arbre mené.

4. Dispositif selon la revendication 3, **caractérisé en ce que** le bras (4) pivotant présente une extrémité proximale comportant un alésage (43) par lequel il est monté par ajustement sur l'arbre (5) mené, le balai d'essuie-glace étant monté solidaire en rotation de l'arbre mené.

5. Dispositif selon l'une des revendications 1 à 4, **caractérisé en ce qu'**il comprend une unique fourchette montée pivotante autour de l'axe (51) de pivotement, ladite fourchette présentant deux extrémités fourchues à deux dents chacune, chaque extrémité fourchue enfourchant une protubérance constituée d'un roulement à bille d'axe de rotation monté orthogonal à l'axe (21) de l'arbre menant, une bague intérieure de chaque roulement étant fixée immobile au chariot (3), et une bague extérieure de chaque roulement étant librement rotative par rapport au chariot, les deux protubérances étant diamétralement opposées par rapport à l'axe de l'arbre (2) menant.

6. Dispositif selon l'une des revendications 1 à 5, **caractérisé en ce qu'**il comprend en outre un coulisseau (7) d'axe parallèle à l'axe (21) de l'arbre (2) menant, sur lequel ledit chariot (3) coulisse, et adapté pour bloquer le chariot (3) en rotation autour de l'axe (21) de l'arbre (2).

7. Dispositif selon l'une des revendications 1 à 6, **caractérisé en ce qu'**il comporte en outre un boîtier (81, 82, 83) :
- enfermant le moteur électrique, l'arbre menant, le chariot, le bras pivotant,
- présentant au moins une ouverture de passage pour une liaison en rotation entre le bras pivotant et l'arbre (5) mené,
- présentant un palier de maintient de l'arbre (2) menant selon son axe (21).

## Patentansprüche

1. Scheibenwischervorrichtung, die Folgendes umfasst:
- eine Antriebswelle (2), die mindestens ein Gewinde aufweist,
- einen Elektromotor (1), der angepasst ist, um die Antriebswelle (2) in zwei Rotationsrichtungen um eine Achse (21) antreiben zu können,
- ein Gewindegestell (3), das auf die Antriebswelle derart montiert ist, dass es in Verschiebung entlang der Antriebswelle unter der Einwirkung einer Drehung der Antriebswelle um ihre Achse (21) angetrieben wird und mindestens einen Vorsprung (61, 62) aufweist, der radial in Bezug auf die Achse (21) der Antriebswelle (2) vorsteht,
- mindestens einen Schwenkarm:
• der schwenkend um eine Schwenkachse (51) orthogonal zu und entfernt von der Achse (21) der Antriebswelle (2) montiert ist,
• der eine mechanische Gleitverbindung mit mindestens einem Vorsprung (61, 62) des Gestells (3) umfasst, wobei die mechanische Gleitverbindung angepasst ist, um den Schwenkarm in Drehung um die Schwenkachse (51) unter der Einwirkung einer Verschiebung des Gestells (3) antreiben zu können,
• der in Drehung mit einem Scheibenwischerblatt verbunden ist,
**dadurch gekennzeichnet, dass**:
- das Gestell (3) ein Rezirkulationsgestell von Kugeln ist, die angepasst sind, um mit mindestens einem Gewinde der Antriebswelle (2) zusammenzuwirken,
- mindestens ein Schwenkarm eine Gabel (4) ist, die mindestens ein distales gegabeltes Ende (41, 42) aufweist, das einen Vorsprung überspannt,
- jeder von einem gegabelten Ende (41, 42) überspannte Vorsprung (61, 62) einer Gabel (4) eine Form aufweist, die angepasst ist, um sich in Verschiebung zwischen den Zinken des vergabelten Endes der sie überspannenden Gabel bewegt und eine Verschiebung des Gestells (3) in Drehung dieser Gabel um die Schwenkachse (51) umzuformen,
- mindestens ein Vorsprung (61, 62), ein Kugellager umfasst, das mit Rotationsachse orthogonal zu der Achse (21) der Antriebswelle (2) montiert ist, wobei ein Innenring des Lagers stationär an dem Gestell (3) befestigt ist, und ein Außenring in Bezug zu dem Gestell frei drehbar ist und von einem gegabelten Ende einer Gabel (4) überspannt ist.

2. Vorrichtung nach Anspruch 1, **dadurch gekennzeichnet, dass** der Vorsprung (61, 62) ein Kugellager umfasst, das mit Rotationsachse orthogonal zu der Achse (21) der Antriebswelle (2) montiert ist, wobei ein Innenring des Lagers stationär an dem Gestell (3) befestigt ist, und ein Außenring in Bezug zu dem Gestell frei drehend montiert ist und von einem gegabelten Ende einer Gabel (4) überspannt ist.

3. Vorrichtung nach einem der Ansprüche 1 oder 2, **dadurch gekennzeichnet, dass** mindestens ein Schwenkarm (4) mit einer Abtriebswelle (5) gekoppelt ist, um die Abtriebswelle in Drehung um die Schwenkachse (51) unter der Einwirkung einer Drehung des Schwenkarms (4) anzutreiben, wobei ein Scheibenwischerblatt mit der Abtriebswelle gekoppelt ist.

4. Vorrichtung nach Anspruch 3, **dadurch gekennzeichnet, dass** der Schwenkarm (4) ein proximales Ende aufweist, das eine Bohrung (43) umfasst, durch die er durch Einstellen auf der Abtriebswelle (5) montiert ist, wobei das Scheibenwischerblatt in Drehung fest mit der Abtriebswelle verbunden montiert ist.

5. Vorrichtung nach einem der Ansprüche 1 bis 4, **dadurch gekennzeichnet, dass** sie eine einzige Gabel umfasst, die um die Schwenkachse (51) schwenkend montiert ist, wobei die Gabel zwei vergabelte Enden mit jeweils zwei Zinken aufweist, wobei jedes vergabelte Ende einen Vorsprung überspannt, der aus einem Kugellager mit orthogonal zu der Achse (21) der Antriebswelle montierter Achse gebildet ist, wobei ein Innenring jedes Lagers stationär an dem Gestell (3) befestigt ist, und ein Außenring jedes Lagers frei in Bezug zu dem Gestell drehbar ist, wobei die zwei Vorsprünge in Bezug zu der Achse der Antriebswelle (2) diametral entgegengesetzt sind.

6. Vorrichtung nach einem der Ansprüche 1 bis 5, **dadurch gekennzeichnet, dass** sie außerdem einen Stößel (7) mit Achse parallel zu der Achse (21) der Antriebswelle (2) umfasst, auf der das Gestell (3) gleitet, und der angepasst ist, um das Gestell (3) in Drehung um die Achse (21) der Welle (2) zu blockieren.

7. Vorrichtung nach einem der Ansprüche 1 bis 6, **dadurch gekennzeichnet, dass** sie außerdem ein Gehäuse (81, 82, 83) umfasst:
- das den Elektromotor, die Antriebswelle, das Gestell, den Schwenkarm einschließt,
- das mindestens eine Durchgangsöffnung für eine Drehverbindung zwischen dem Schwenkarm und der Abtriebswelle (5) aufweist,
- das eine Haltelager der Antriebswelle (2) auf ihre Achse (21) aufweist.

## Claims

1. Windscreen wiper device comprising:
- a driveshaft (2) having at least one threading,
- an electric motor (1) designed to be able to drive the driveshaft (2) in two directions of rotation about an axis (21),
- a tapped carriage (3) mounted on the driveshaft in such a way as to be driven in translation along the driveshaft under the effect of rotation of the driveshaft about the axis (21) thereof, and having at least one protuberance (61, 62) projecting radially with respect to the axis (21) of the driveshaft (2),
- at least one arm that pivots:
• mounted pivotingly about a pivot axis (51) that is orthogonal and spaced apart from the axis (21) of the driveshaft (2),
• comprising a sliding mechanical connection with at least one protuberance (61, 62) of the carriage (3), said sliding mechanical connection being designed to be able to drive the arm that pivots in rotation about the pivot axis (51) under the effect of a translation of the carriage (3),
• linked in rotation with a windscreen wiper blade, **characterised in that**:
- the carriage (3) is a carriage with recirculating balls designed to cooperate with at least one threading of the driveshaft (2),
- at least one arm that pivots is a fork (4) having at least one forked distal end (41, 42) straddling a protuberance,
- each protuberance (61, 62) straddled by a forked end (41, 42) of a fork (4) has a shape designed to be able to be moved in translation between the teeth of the forked end of the fork straddling it, and transform a translation of the carriage (3) in rotation of this fork about the pivot axis (51),
- at least one protuberance (61, 62) comprises a ball bearing mounted with an axis of rotation that is orthogonal to the axis (21) of the driveshaft (2), with an inner ring of said bearing being immovably fixed to the carriage (3), and an outer ring rotating freely with respect to the carriage and straddled by a forked end of a fork (4).

2. Device according to claim 1, **characterised in that** each protuberance (61, 62) comprises a ball bearing mounted with an axis of rotation that is orthogonal to the axis (21) of the driveshaft (2), an inner ring of said bearing being immovably fixed to the carriage (3), and an outer ring rotating freely with respect to the carriage and straddled by a forked end of a fork (4).

3. Device according to one of claims 1 or 2, **characterised in that** at least one arm (4) that pivots is coupled with a driven shaft (5) in order to be able to drive the driven shaft in rotation about the pivot axis (51) under the effect of rotation of the arm (4) that pivots, with a windscreen wiper blade being coupled to the driven shaft.

4. Device according to claim 3, **characterised in that** the arm (4) that pivots has a proximal end comprising a bore (43) through which it is mounted by adjusting on the driven shaft (5), with the windscreen wiper blade being mounted integral in rotation with the driven shaft.

5. Device according to one of claims 1 to 4, **characterised in that** it comprises a single fork mounted pivotingly about the pivot axis (51), with said fork having two forked ends with two teeth each, with each forked end straddling a protuberance constituted of a ball bearing with an axis of rotation mounted orthogonal to the axis (21) of the driveshaft, an inner ring of each bearing being immovably fixed to the carriage (3), and an outer ring of each bearing rotating freely with respect to the carriage, with the two protuberances being diametrically opposite with respect to the axis of the driveshaft (2).

6. Device according to one of claims 1 to 5, **characterised in that** it further comprises a slide (7) with an axis parallel to the axis (21) of the driveshaft (2), whereon said carriage (3) slides, and designed to block the carriage (3) in rotation about the axis (21) of the shaft (2).

7. Device according to one of claims 1 to 6, **characterised in that** it further comprises a case (81, 82, 83) :
- enclosing the electric motor, the driveshaft, the carriage, the arm that pivots,
- having at least one opening of a passage for a connection in rotation between the arm that pivots and the driven shaft (5),
- having a bearing for maintaining the driveshaft (2) according to the axis (21) thereof.
